# EUROPEAN PATENT APPLICATION

(11) **EP 2 023 622 A1**
(43) Date of publication of application: **11.02.2009**
(21) Application number: 07015523.9
(22) Date of filing: 07.08.2007
(51) Int. Cl.: H04N 5/50, H04N 5/00, H04N 5/445

(54) **Method for selection of television programs**

(71) Applicant: Nokia Siemens Networks Oy, 02610 Espoo (FI)
(72) Inventor: The designation of the inventor has not yet been filed
(74) Representative: Bruglachner, Thomas E.

(57) **Abstract**

A method and a corresponding device (101) for selection of television programs employ a content category identifier, which designates a current first content category of a first program content (121). A second program content (122) is transmitted to a subscriber device (101, 108) and played back (105) for perception by a consumer (109). The content category identifier is compared (112) with a preferred-content category identifier. On a matching of both identifiers the consumer 109 receives a notification (114). In addition or as an alternative, a change (103) from the first playback (105) of the second program content (122) to a second playback (106) of the first program content (121) is triggered on a matching of the identifiers.

## Description

### Field of invention

The present invention relates to the field of television (TV) systems and more particularly to an assistance system for facilitating an optimized selection of television programs and/or television channels.

### Art Background

The vast amount of information now available on different media is becoming more and more a problem to content consumers. The available information covers about every possible existing topic whereas consumers, typically - at a specific point in time - show interest in only a limited number of topics. Therefore, a consumer has to select the right information channel at the right moment in order to get access to the content he is interested in.

Broadcast media provide written and online TV-guides, such as an Electronic Program Guide (EPG), with the programs scheduled for a specific period. In addition, in-between program blocks, short flashes are inserted advertising the scheduled programs for the next hours.

Considering broadcast media, the consumer is receiving information about which channel will deliver what content. However, due to the business model used here, this content is interleaved with other information blocks that may contain mainly commercial advertising messages, but also news flashes, broadcast program announcement, weather forecasts, etc. The consumer has currently no possibility to know what will be distributed in these added information slots. The content is often interrupted by these blocks.

One way how consumers adapt to this reality is recording of the program to view it at a later time (Time Shifting). If additional information about the respective program category of each transmitted program block is available, such information allows a fast (automatic) skipping of the blocks. Thus a less interrupted viewing experience may be facilitated. Many of the systems designed for this purpose rely on prior marking or coding of the information for subsequent identification. The mark, i.e. designation of the content category, will typically include a start- and an end-mark, as well as additional information, such as program category and title. The additional information may be included when the signal is originally broadcasted, but it is typically added by an annotation service.

A second way how consumers handle program interruption is the "channel surfing" or "zapping" behavior, wherein a consumer zaps away when content is interrupted and tunes in shortly to another channel. The consumer has to take care to return in time if he wants to continue viewing the content on the first channel after the ad-break.

A third way is suggested by US6,782,186B1. Therein, broadcast-frames are compared with available frames. On matching of the frames a specific function for recording of information is executed.

A consumer watching a TV channel may want to be alerted when a broadcast of specific content starts on another channel (e.g. when the news report starts on channel 1). For this purpose a method using the EPG may be employed. However, the EPG data is neither accurate nor detailed enough. For example, an EPG does not mention start or finish of advertisement blocks, news flashes, weather reports, etc. Consequently, there may be a need for a method and for a corresponding device for facilitating an improved program selection and/or an improved channel selection, responding more precisely to the specific demand of each individual consumer.

### Summary of the Invention

This need may be met by the subject matter according to the independent claims. Advantageous embodiments of the present invention are described by the dependent claims.

According to a first aspect of the invention a method for selection of television programs is provided. The method comprises following steps: Initially, a first content category identifier for a first program content is created. The first content category identifier designates a first content category and comprises a first time designation. Then a second program content is transmitted to a subscriber device. Using the subscriber device the second program content is played back for perception by a consumer. Then the first content category identifier of the first program content is compared with a first preferred-content category identifier. If the first content category identifier of the first program content is matching the first preferred-content category identifier, the consumer receives a first notification. In addition or as an alternative, a first change from the first playback of the second program content to a second playback of the first program content is performed. The first time designation may specify explicitly or implicitly a first begin time for the first content category within the first program content.

In the following exemplary embodiments of the present invention will be described, with reference to a method for selection of television programs. It has to be pointed out that of course any combination of features relating to different subject matters is also possible.

In a preferred embodiment following additional method step is performed after the first change. If the content category identifier of the first program content is no longer matching the first preferred-content category identifier the consumer receives a second notification. In addition or as an alternative, a second change from the second playback of the first program content to a third playback of the second program content is performed. In a further preferred embodiment the first or second change is performed at an event which is dependent on the first program content. In a further preferred embodiment the first or second change is performed at an event which is dependent on the second program content.

In a further preferred embodiment at least one of the first notification and the first change is disabled if a second content category identifier of the second program content is matching a second preferred-content category identifier.

In a further preferred embodiment a manual change of a program being played back is only enabled within a first predetermined period, wherein the first predetermined period starts with a begin of the program content (and is disabled afterwards), in particular wherein the program content is designated with a third preferred-content category identifier.

In a further preferred embodiment the method comprises following steps in addition: A second content category identifier for the second program content is created. The second content category identifier designates a second content category and comprises a second time designation. A third program content is transmitted to the subscriber device. Using the subscriber device the second program content is played back for perception by the consumer. The second content category identifier of the second program content is compared with a fourth preferred-content category identifier. If the second content category identifier of the second program content is not matching the fourth preferred-content category identifier the consumer receives a third notification. In addition and/or as an alternative a third change from the fourth playback of the second program content to a fifth playback of the third program content is performed. The second time designation may specify explicitly or implicitly a second begin time for the second content category within the second program content. In a further preferred embodiment the third change is performed at an event which is dependent at least on one of the second and third program content.

In a further preferred embodiment, following additional method step is performed after the third change, if the second content category identifier of the second program content is no longer not matching the fourth preferred-content category identifier. The consumer receives a fourth notification. In addition or as an alternative a fourth change to the sixth playback of the second program content is performed. In a further preferred embodiment the fourth change is performed at an event which is dependent on the second program content. In a further preferred embodiment the fourth change is performed at an event which is dependent on the third program content.

In a further preferred embodiment the method also includes a fourth transmission of a fourth program content to the subscriber device. After the third change and before the fourth change an additional method step is performed, if a third content category identifier of a fourth program content is matching a fourth preferred-content category identifier. The consumer receives a fifth notification. In addition or as an alternative, the fifth playback of the third program content is changed to a sixth playback of the fourth program content. In a further preferred embodiment the fifth change is performed at an event which is dependent on at least on one of the third and fourth program content.

In a further preferred embodiment at least one of the first, second, third and fourth notifications will not be performed if the content category identifier assigned to the program content being currently played back, has been predetermined as a first preferred-content category identifier.

In a further preferred embodiment at least one of the first, second, third and fourth changes will not be performed if the content category identifier assigned to the program content being currently played back, has been predetermined as a first preferred-content category identifier.

In a further preferred embodiment the first notification of the consumer notifies the consumer about one of a first begin time and a first resumption time of the first program content.

In a further preferred embodiment the first notification of the consumer comprises an explicit or an implicit designation of a time span corresponding to a temporal difference between the time designated by the content category designation of the first program content and a current time.

In a further preferred embodiment the consumer may designate the first program content as a preferred program content by a precedent selecting of a portion of the first program content for playback for a longer time than corresponds to a second predefined period length. The first predefined period length may be settable at the subscriber device.

In a further preferred embodiment at least one of the first and the second content category identifiers is added to information, which comprises at least the corresponding program content. Then the content category identifier is transmitted together with this information to the subscriber device.

In a further preferred embodiment the first program content is transmitted via a first transmission channel, whereas the second program content is transmitted via a second transmission channel.

In a further preferred embodiment the first change is only performed, if the first program content is transmitted via a preferred transmission channel.

In a further preferred embodiment the first notification is only performed, if the first program content is transmitted via a preferred transmission channel.

In a further preferred embodiment the first change is not performed, if the second transmission channel has been determined as a preferred transmission channel before.

In a further preferred embodiment the first notification is not performed, if the second transmission channel has been determined as a preferred transmission channel before.

In a further preferred embodiment a consumer predetermines a transmission channel as preferred transmission channel by selecting the transmission channel for playback for a longer time than corresponds to a length of a third predefined period. The length of the third predefined period may be settable at the subscriber device.

In a further preferred embodiment the first change to the first program content takes place at a predetermined time. In a further preferred embodiment the first change to the first program content takes place not before expiry of a fourth predefined period after the last change. In a further preferred embodiment the first change is delayed until the expiry of a fourth predefined period. The length of the fourth predefined period may be settable at the subscriber device.

In a further preferred embodiment the content category identifier of the first program content is transmitted to the subscriber device. The subscriber device compares the content category identifier of the first program content with the first preferred-content category identifier.

In a further preferred embodiment the subscriber device generates at least one of the first, second, third, fourth, and fifth notifications. In a further preferred embodiment the subscriber device performs at least one of the first, second, third, fourth, and fifth changes.

In a further embodiment at least one of the first, second, third, fourth, and fifth changes may be performed directly without subscriber action.

In a further embodiment at least one of the first, second, third, fourth, and fifth changes can be activated and deactivated via an input by the subscriber. In a further preferred embodiment at least one of the first, second, third, fourth, and fifth notifications can be activated and deactivated via an input by the subscriber.

In a further embodiment more than one first content category identifier may simultaneously designate the content category of the first program content. In a further preferred embodiment more than one second content category identifier may simultaneously designate the content category of the second program content.

In a further embodiment more than one first preferred-content category identifier is simultaneously predefined by the subscriber device or by the consumer. In a further preferred embodiment more than one second preferred-content category identifier is simultaneously predefined by the subscriber device or by the consumer.

In a further embodiment for each subscriber device one or more transmission channels may be predetermined as preferred transmission channels. In a further preferred embodiment for each consumer one or more transmission channels may be predetermined as preferred transmission channels.

In a further embodiment the consumer may set the predetermined time via an input at the subscriber device.

According to a further aspect a subscriber device for one or more consumers may be provided which is designed to perform the method according to one of the embodiments described before.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 illustrates a basic arrangement of devices performing the method according to a first aspect of the invention.
Fig. 2 illustrates a basic arrangement of devices performing the method according to a preferred embodiment of the invention.
Fig. 3 illustrates a basic arrangement of devices performing a preferred embodiment of the method according to one of the figures 1 and 2.
Fig. 4 illustrates a sequence and allocation of content category identifiers and time designations in relation to corresponding program content.
Fig. 5 to 8, and 17 illustrate configuration menus with exemplary settings which are displayed on the subscriber device.
Fig. 8 to 21, except Fig. 17, illustrate screen shots with messages for user guidance.
Fig. 22 to 32 illustrate configuration menus with exemplary settings which are displayed on the subscriber device.
Fig. 33 shows a flow diagram for detection of a preferred channel.
Fig. 34 shows a flow diagram about the procedure when a "zapping" away from the primary channel occurs.

### Detailed Description

The illustration in the drawing is schematic. It is noted that in different figures, similar or identical elements are provided with the same reference signs or with reference signs, which are different from the corresponding reference signs only within the first digit.

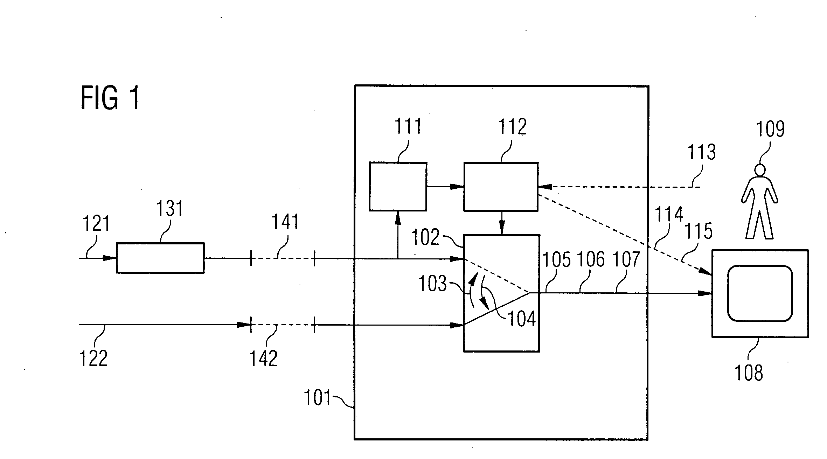

Fig. 1 illustrates a basic arrangement of devices performing the method according to a first aspect of the invention. A first television program 121 is fed to an identifier generator 131 for generating content category identifiers. The content category identifiers of identifier generator 131 designate in real-time the current type of the content of the first television program 121. A second television program 122 is transmitted via a communication link 142 to a first switch 102. The first switch 102 passes through the second television program 122 for a first playback 105, using a television set 108 to display the second television program 122 for perception by a consumer 109. The identifier generator 131 may be realized by employing an annotation service. The first television program 121 is transmitted together with the relating content category identifiers from the identifier generator 131 via a communication link 141 to first switch 102. An extractor 111 within set-top box 101 extracts the content category identifiers from the information received via communication link 141. A comparator 112 within set-top box 101 receives from extractor 111 the extracted content category identifiers. The comparator 112 steadily compares the extracted content category identifiers with first preferred-content category identifiers. For configuration of the set-top box 101, the consumer 109 may set one or more of the first preferred-content category identifiers at a user interface 113. If the extracted content category identifier is matching one of the first preferred-content category identifiers, comparator 112 issues a first notification 114 to the consumer 109 via the television set 108. As an alternative or in addition, the comparator 112 may control a toggle 103 of the first switch 102. Then, instead of second television program 122, the first television program 121 is passed through the first switch 102 and displayed to the consumer 109 (second playback 106).

In a more advanced embodiment the comparator 112 continues comparing the extracted content category identifiers with the first preferred-content category identifiers. If the extracted content category identifiers are not longer matching the first preferred-content category identifier, comparator 112 issues a second notification 115 to the consumer 109 via the television set 108. As an alternative or in addition, the comparator 112 may toggle back 104 the first switch 102. Then, instead of the first television program 121, the second television program 122 is passed through again (reference sign 106) and displayed to the consumer 109 (third playback 107).

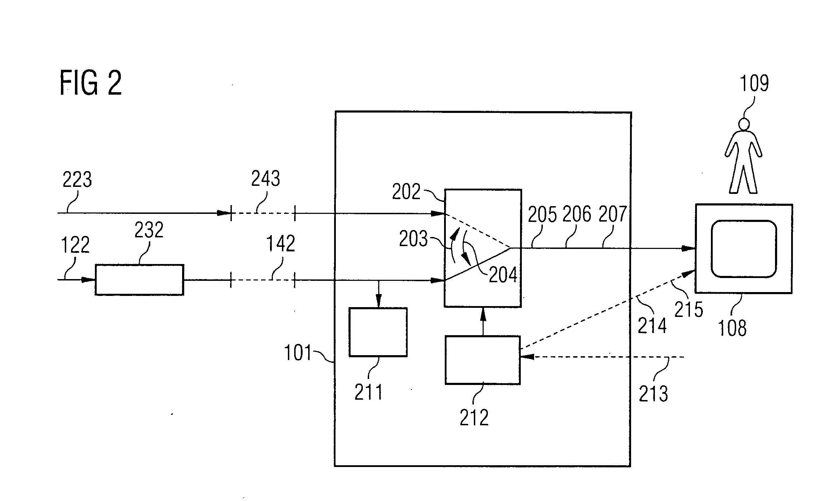

As a further aspect of the invention, or as a preferred embodiment, following method, as illustrated by Fig. 2, may be employed. To retain clarity, many parts of figure 1 are not repeated in figure 2; nevertheless the embodiment of figure 2 typically comprises all parts and functions of the arrangement of figure 1.

The third television program 223 is transmitted via the communication link 243 to a second switch 202. The second television program 122 is fed to an identifier generator 232 for generating content category identifiers. The content category identifiers of identifier generator 232 designate in real-time the current type of the content of a second television program 122. The identifier generator 232 may be realized by employing an annotation service. The second switch 202 passes through the second television program 122 for a fourth playback 205, using a television set 108 to display the second television program 122 for reception by consumer 109. The second television program 122 is transmitted together with the relating content category identifiers from the identifier generator 232 via communication link 142 to the second switch 202. An extractor 211 within set-top box 101 extracts the content category identifiers from the information received via communication link 142. A comparator 212 within set-top box 101 receives from extractor 211 the extracted content category identifiers. The comparator 212 steadily compares the extracted content category identifiers with fourth preferred-content category identifiers. For configuration of the set-top box 101, the consumer 109 may set one or more of the second predefined content category identifiers at a user interface 213. If the extracted content category identifiers are not matching any one of the fourth preferred-content category identifiers, comparator 212 issues a third notification 214 to consumer 109 via television set 108. As an alternative or in addition, the comparator 212 may toggle 203 the second switch 202. Then, instead of the second television program 122, the third television program 223 is passed through and displayed to the consumer 109 (fifth playback 206).

In a more advanced embodiment, the comparator 212 continues to compare the extracted content category identifiers with the fourth preferred-content category identifiers. If the extracted content category identifiers are no longer not match any (i.e. matches again one) of the fourth preferred-content category identifiers, comparator 212 issues a fourth notification 215 to the consumer 109 via the television set 108. As an alternative or in addition, the comparator 112 may toggle back 204 the second switch 202. Then, instead of the first television program 121, the second television program 122 is passed through again and displayed to the consumer 109 (sixth playback 207).

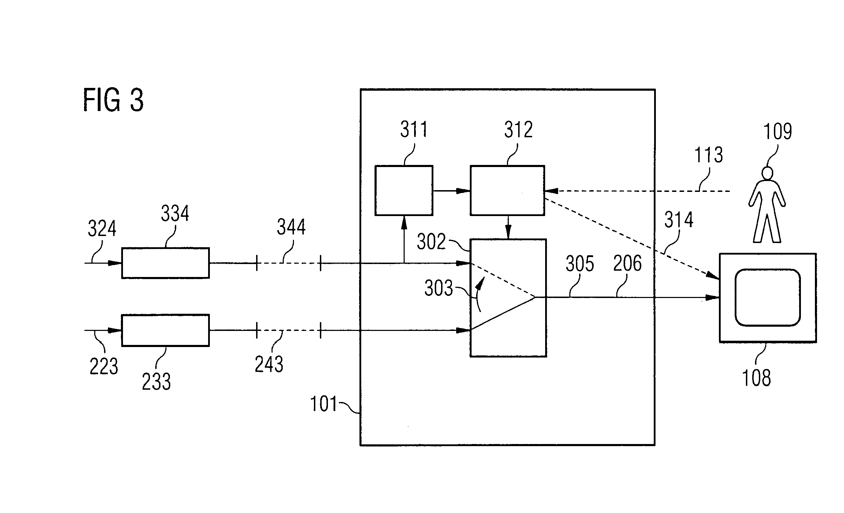

Fig. 3 illustrates a basic arrangement of devices performing a further preferred embodiment of the method according to figure 1 and/or figure 2. To retain clarity, many parts of figures 1 and 2 are not repeated in figure 3. Nevertheless the embodiment of figure 3 typically comprises further parts and functions of the arrangement of figure 1 and/or figure 2. Herein, the third switch 302 passes through the third television program 223 for the fifth playback 206, using the television set 108 to display the third television program 223 for perception by the consumer 109. A fourth television program 324 is fed to an identifier generator 334 for generating content category identifiers. The content category identifiers of identifier generator 334 designate in real-time the current type of the content of the fourth television program 324. The third television program 223 is transmitted via the communication link 243 to a third switch 302. The identifier generator 334 may be realized by employing an annotation service. The fourth television program 324 is transmitted together with the relating content category identifiers from the identifier generator 334 via a communication link 344 to the third switch 302. An extractor 311 within the set-top box 101 extracts the content category identifiers from the information received via communication link 344. A comparator 312 within the set-top box 101 receives from extractor 311 the extracted content category identifiers. The comparator 312 steadily compares the extracted content category identifiers with fifth preferred-content category identifiers. For configuration of the set-top box 101, the consumer 109 may set one or more of the fifth preferred-content category identifiers at the user interface 113. If the extracted content category identifier is matching one of the fifth preferred-content category identifiers, comparator 312 issues a fifth notification 314 to the consumer 109 via the television set 108. As an alternative or in addition, the comparator 312 may control a toggle 303 of the third switch 302. Then, instead of third television program 223, the fourth television program 324 is passed through the switch 302 and displayed to the consumer 109 (seventh playback 305).

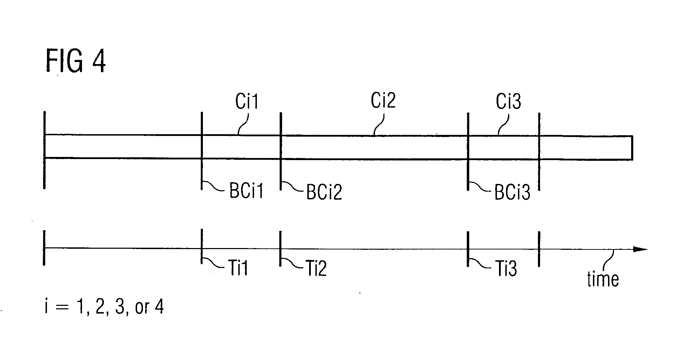

Fig. 4 illustrates a sequence and allocation of content category identifiers and time designations in relation to corresponding program content. Program content Ci1, Ci2, Ci3, ... is temporally stringed together. Each of the content category identifiers BCi1, BCi2, BCi3, ... designates a content category of the temporally following corresponding program content Ci1, Ci2, Ci3, ... Each of the content category identifiers BCi1, BCi2, BCi3 ... comprises an explicit or an implicit time designation Ti1, Ti2, Ti3 for the begin time of the corresponding program content Ci1, Ci2, Ci3, ... Index i runs from 1 to 4 (i=1 for program content 121; i=2 for program content 122; i=3 for program content 223; and i=4 for program content 324).

The method of the present invention uses marking or coding information that marks the beginning and/or the end of content of information blocks. This information is typically made available by an annotation service, but may also be included by the broadcaster. The invention allows the consumer to zap away from a currently visited program or channel. When zapping away, the method includes a saving of a reference to the channel or a reference to the content block being broadcasted at the channel change. As an alternative, also a portion or the entire content block may be saved. This allows for return to the original channel at a specified moment, typically at the end of the information or the content block carrying the inserted program content. The system is independent from a fixed 30 second period and can be used to zap away from ongoing advertisements as well as short news flashes or even unwanted content.

The invention can also be used to trigger a notification or a channel change, when specific content is starting at start of news on a primary channel or on one of a number of specified channels.

The system is activated - automatically (after tuning in on a specific channel for more than a preset time which is changeable by the consumer, the system considers this channel to be the primary channel) - or manually (the consumer indicates which channel will be the primary channel, this channel remains the primary channel, even if the consumer tunes in on another channel for a longer period of time).

The system allows for specification of assistance for all or only for specific categories. If assistance is selected only for advertisement blocks, this function will only be executed when a zapping occurs during advertisement blocks on the primary channel. Numerous categories can be included.

The system allows for specification of an alert (sound, text, blinking, etc.). The system allows for manual decision (give alert signal before return) or automatic return.

The system allows for specification of the return point (end of ongoing content/information block, specified relative time e.g. 10 min., specified absolute time e.g. 20:00 hours or any combination, start of specific category program, etc.)

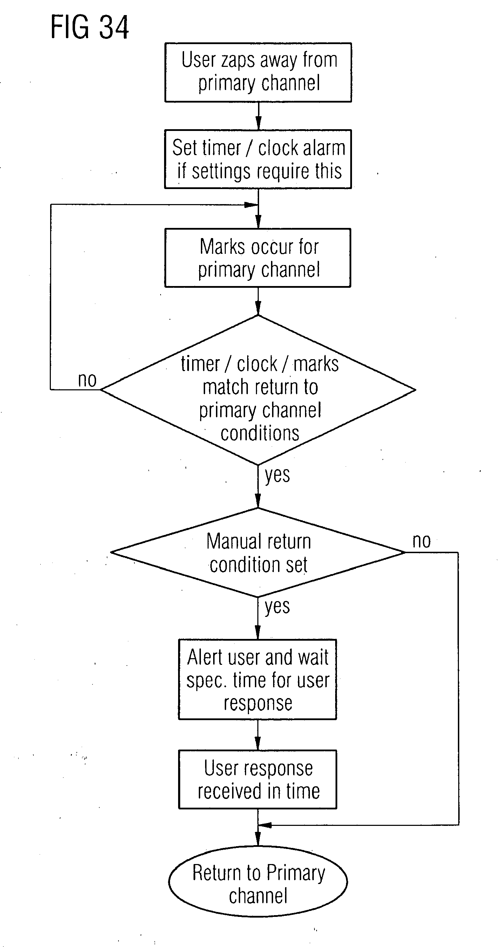

Channel zapping mode: Fig. 34 shows a flow diagram of the procedure when "zapping" away from the primary channel occurs. If after activation, the consumer zaps to another channel, the system remembers the original channel and the information about the ongoing broadcast, e.g. the movie title, the start mark, and the category (movie, advertisement, etc.). Depending on the settings, the assistance function will be activated.

The assistance function will monitor the annotation service for the start/end-block marker(s) and/or relative or absolute time and inform the viewer in case that manual return is activated. The consumer will thus be able to return to the primary channel just in time to continue watching the movie after zapping to other channels during the advertising interrupt.

Content search mode: The system continuously monitors the available triggers for the specified channels and compares them with the requested content / keywords. If a match is detected, the system will notify the consumer and allow for manual/automatic changeover to this channel. After end of the content block, the system will change back manually/automatically to the original channel.

The inventive step in this method is the use and interpretation of mark / trigger signals that are related to the programs for real-time assistance to the consumer. This allows the implementation of a method that provides an accurate "zapping" assistance and an accurate "content search" assistance.

In combination with relative timers or absolute clock alarming functions, this provides a flexible assistance for the consumer. The method relies on the availability of the annotation service. The provision of a clock and of timers is considered as state-of-the-art.

In the following a more detailed description of a typical embodiment is explained. The set-top box is equipped with user menus to allow the consumer to enable various functions and options. The user interface contains at least following configurable items:
Viewing assistance: <enabled/disabled>
Status message: <enabled/disabled>
Assistant mode: <default/auto/manual>
Criteria:
   Preferred channel: <auto/manual/disabled>
   channel ID: <list>
   Preferred content: <auto/manual/disabled>
   content category: <list>
   Preferred keywords: <auto/manual/disabled>
   keywords: <list>
   Time to automatic select: <x minutes>
Action:
   Change of channel: <auto/manual>
   Audible signal: <beep/sound1/sound2/disabled>
   Visible signal: (flash/message/blank/inverse/disabled>
Conditions:
   <Continuation of content>
   <Start of content>
   <End of content>
   <No change of channel>
   <After relative time> time: <e.g. 30 seconds>
   <At absolute time> time: <e.g. 20:30>
   <Keyword detection>

In the following a typical menu layout is described.

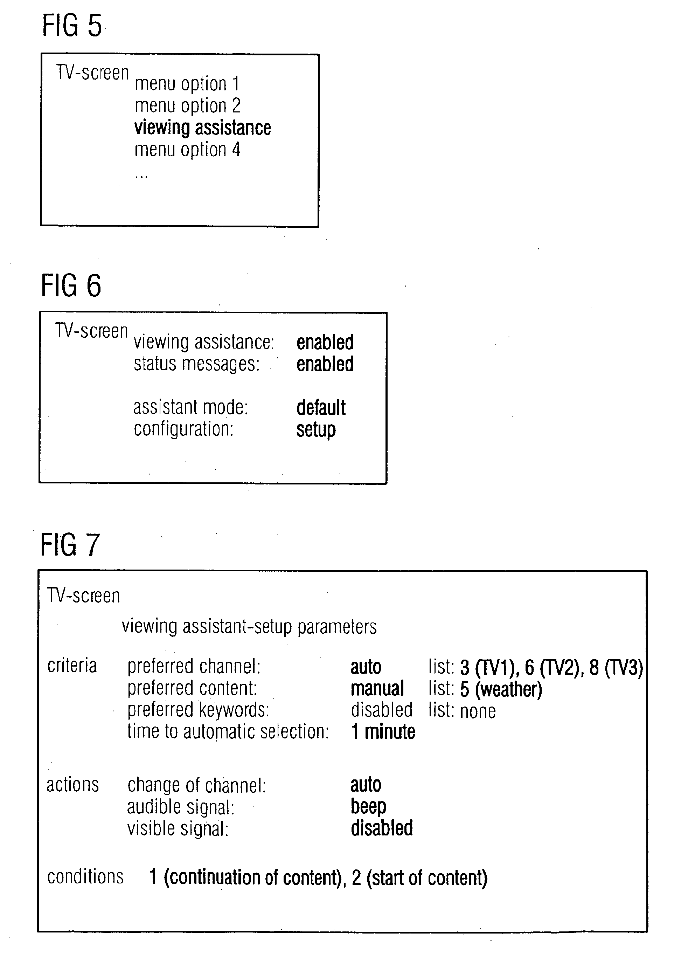

Configuration parameters can be changed via normal menu options. An example of a menu layout is illustrated in Fig. 5. By selecting the "viewing assistance", the consumer will be able to enter the menu (Fig. 6). There he can enable or disable the viewing assistance function and relating sub-functions. Besides enabling or disabling the viewing assistance, the consumer can enable/disable status messages, choose the assistant mode (default/ auto/ manual), or enter the configuration screen, where more parameters can be specified. The status messages will provide indications for a few seconds about the actions the assistant is executing.

The assistant mode "default" means that default values are used for some parameters to enable following simple viewing assistance: If the consumer zaps away during a break/ commercial, the system will return automatically to the channel when the original program continues. For this purpose the system will determine the return-channel automatically, will monitor the zapping-behavior of the consumer, will remember the original channel and the original program, when the consumer zaps to another channel, will monitor the triggering for continuation of this original program, and will automatically return to the original channel, when the triggering indicates that the program continues. The system will hereby generate an audible "beep" signal.

In "auto" or "manual" mode, the values specified in the configuration screen will be used. This configuration screen allows for more complex assistance than the simple viewing assistance in "default" mode. If the consumer has selected the "auto" assistant mode, an automatic change of channel will occur for each determined / proposed change of channel. If the consumer has selected the "manual" assistant mode, an automatic change of channel will not occur. But the assistant will ask for each determined / proposed change of channel for confirmation from the consumer.

A typical layout of the configuration screen is illustrated by Fig. 7.

In the example below the consumer specified following options:
- The preferred channel will be each of the following four channels: firstly the channel determined automatically by viewing the specific channel for more than one minute and secondly the fixed set of channels 3, 6, and 8.
- The preferred content is specified as 5 (here "weather reports").
- No preferred keywords are specified.

On meeting one of the conditions the assistant issues a beep. The assistant will not display a visible signal and will change automatically to the preferred channel that meets the condition. The conditions are "continuation of content" and "start of content".

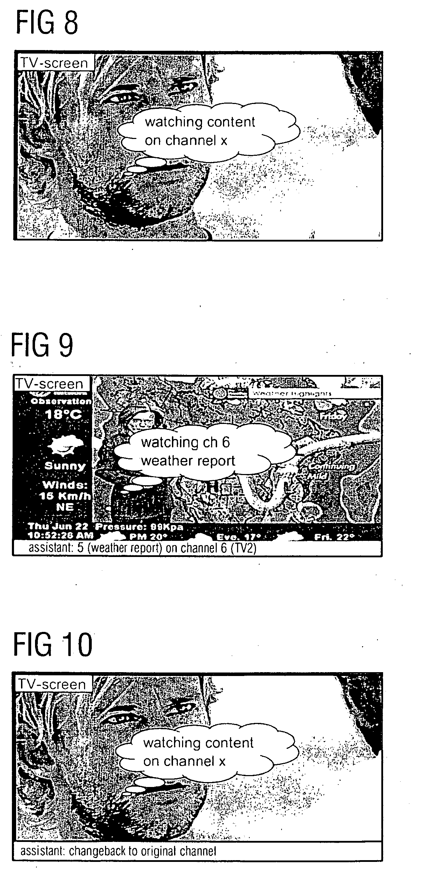

After leaving these menu options, the system is active (Fig. 8). Once the system is configured, the assistant is enabled. It will start immediately by monitoring the available triggers for the fixed channels. If the consumer stays on one channel for more than one minute, then this channel will be added to the channels to be monitored.

For this example, whenever the system detects a start of preferred content - as long as the consumer does not zap - this can only be weather content in this example - the channel will beep and change automatically to the channel (Fig.9 ) with the preferred content (here a weather content block) and afterwards change back to the original channel (Fig. 10).

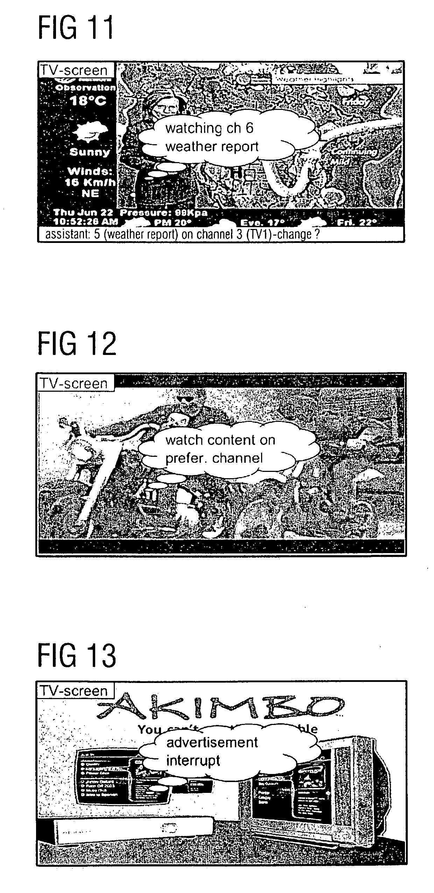

Monitoring of triggers detects start of weather report on channel 6. A beep is issued, and a change of channel and a a status message is displayed for some seconds (Fig. 11). If, during this weather report, another weather report starts on a different preferred channel, the system will not change but indicate the start of this preferred content block and allow for manual changeover (Fig. 11). After the end of the weather report, the system changes back to the original content (Fig. 12), and displays a short message for some seconds.

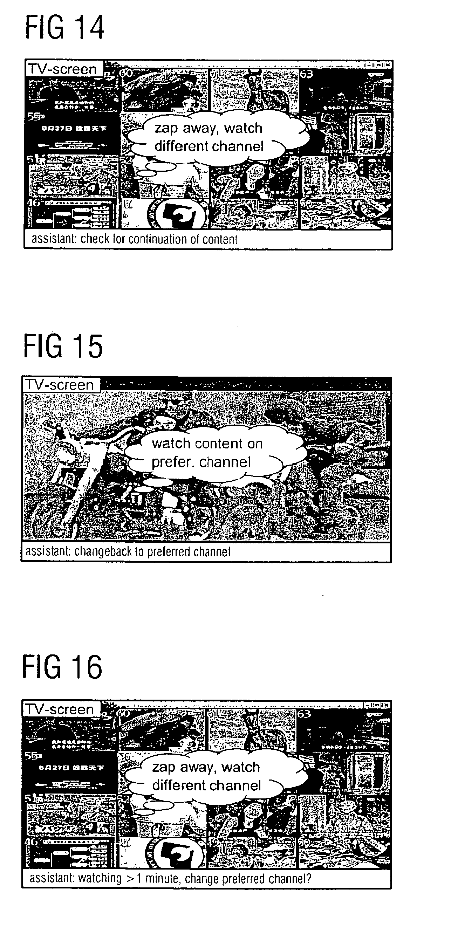

If the consumer is watching a movie which is interrupted e.g. by advertisement (Fig. 13) and the consumer zaps away (Fig. 14), the movie content id will be added as preferred content.

The system may remember that this zapping away is a zapping away from an already started content. It thus looks out for re-appearance of this content (condition: continuation of content - also used in messages).

This is in contrast to the second condition where the system is on the constant monitoring for beginning of content. The marks or triggers might - but need not - be different for beginning of a program/movie and continuation of a program/movie. The system may handle both at the same time and thus watch out for continuation of specific content while at the same time watching out for start of (other) content.

If marks are different the system might even give higher priority to a continuation of content.

If, after some time, the movie is continued, this will trigger the condition "continuation of content", the system will beep, and the channel will automatically be changed to the movie channel again (Fig. 15). A short status message is displayed.

### Advertisement starts:

Firstly the consumer zaps away. If at a later time a continuation of content is detected, a BEEP signal, a change back and a display of a status message takes place.

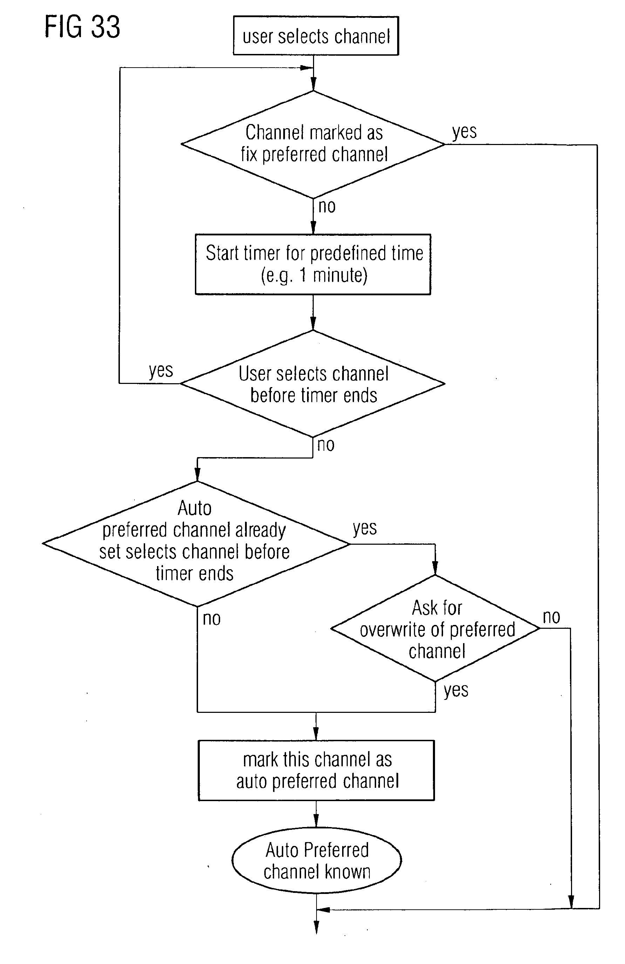

Fig. 33 shows a flow diagram for detection of a preferred channel. If the interrupt is long (> 1 minute) and the consumer stays on a different channel, the consumer will be prompted to change the auto preferred channel (Fig. 16). If the consumer does not accept a change to the auto preferred channel, the preferred channel stays as it is and the auto feature for detection of the preferred channel is disabled until the next change back to the preferred channel.

In this way a consumer can watch a movie, zap away during breaks and will be automatically returned to the movie, when the movie continues. In addition the consumer is redirected to any weather report that occurs on any of the four channels.

In addition, the functions can be enabled/ disabled via short key combinations. If e.g. the consumer does not want to be interrupted for specific content during the movie, a short key combination disables the preferred content criteria. After the movie the consumer can enable this function again.

Furthermore the system can combine the various options. For example: The consumer is watching a movie which is interrupted. Then, the consumer zaps away. The system monitors for continuation of this movie and at the same time for broadcast of a weather report. If a weather report starts, the channel changes to the weather report. If during this weather report (which is preferred content) the movie restarts (which is also preferred content), the system will notify the consumer and ask for confirmation of change.

### B) Description of typical use cases:

### a. Viewing assistance in "default" mode and with status messages enabled:

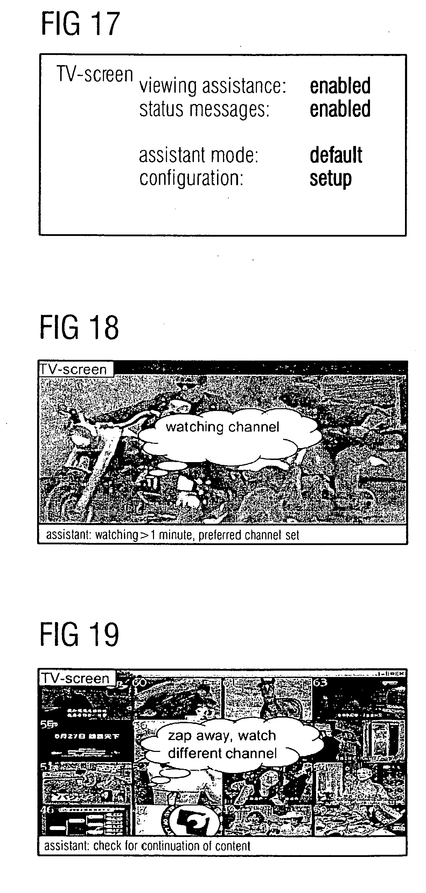

In the setup according to Fig. 17 the entries in the configuration screen are not used. After leaving the menu, the system is active. It will start immediately with detection of the preferred channel. If the consumer stays on one channel for more than one minute, this channel becomes the preferred channel to be monitored. Since status messages are enabled, the system will shortly display a message indicating its choice of preferred channel (Fig. 18). It will start immediately by monitoring the available triggers for this channel.

If the consumer zaps away (Fig. 19) during the movie (no other content block started in the last 30 seconds) then the original channel will be monitored for continuation of the movie (actual content block) after at least one other content block. This is useful in cases where the consumer can already see from the movie that a break is coming up, e.g. when a message like "to be continued after the news" appears. In general, the consumer may not wait for the break to start but may zap away to another channel before the break starts.

If the consumer has waited for the break to start and zaps away during the break (new content block started in the last 30 seconds) then the original channel will be monitored for continuation of the movie (previous content block).

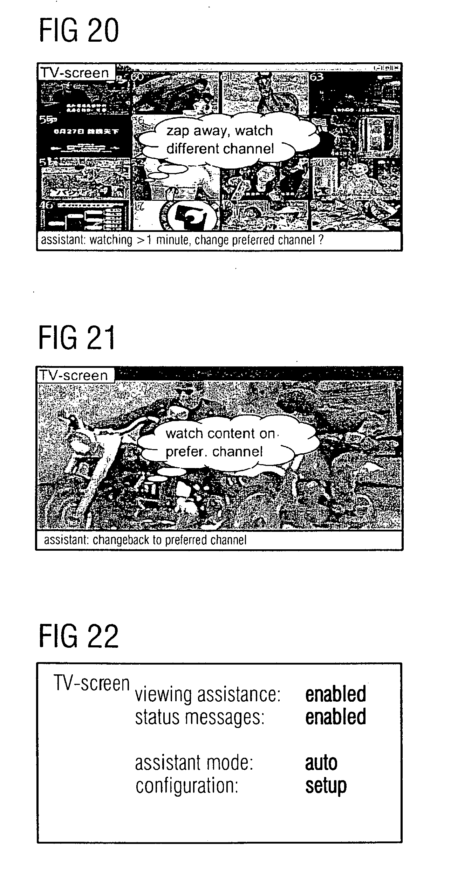

If after zapping away (the interrupt is longer than 1 minute) the consumer stays on a different channel for more than 1 minute, the consumer will be prompted to change the auto preferred channel (Fig. 20, Fig. 33). If the consumer does not accept a change of the preferred channel, the preferred channel stays as it is, and the auto feature for detection of the preferred channel is disabled until the next change back to the preferred channel.

If a continuation of content is detected, a beep signal is issued, and a change back and a display of a status message takes place (Fig. 21).

### b. Viewing assistance - simulation of "default" mode:

When using the configuration setup (Fig. 22), the consumer may setup exactly the same behavior as in the default mode: For this purpose the consumer selects the assistance mode "auto" to enable an automatic change of the viewed channel:

Status messages can also be enabled or disabled, even if this is no part of the default setup.

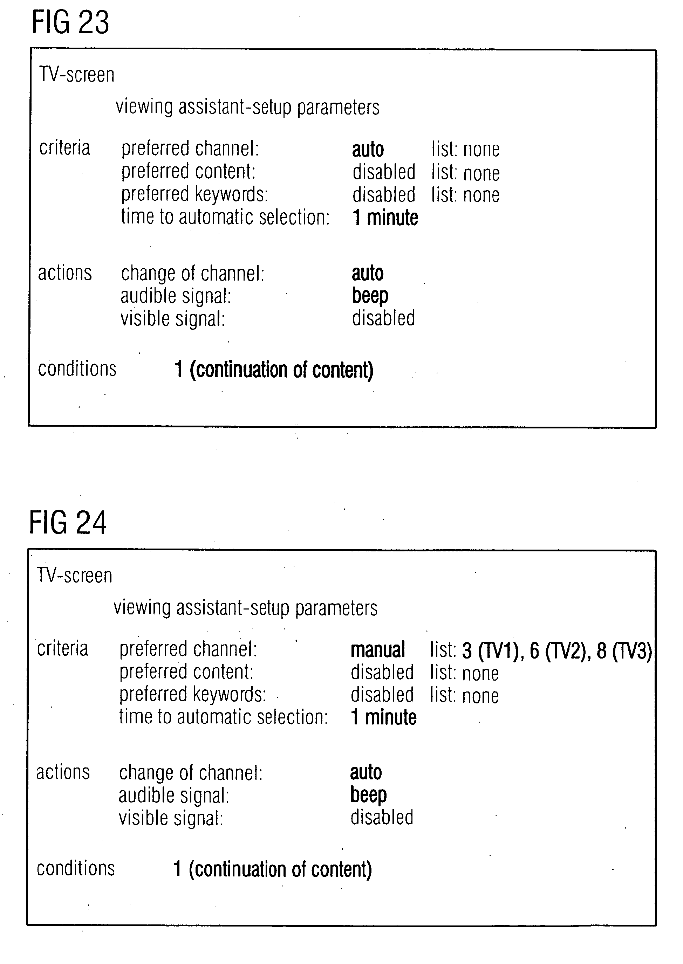

In the configuration screen (Fig. 23), the consumer selects "auto" detection of preferred channel, time to automatic selection set to "1 minute", "beep" as signal, "auto" change of channel, and "continuation of content" as condition.

### c. Viewing assistance - use of fixed list of preferred channels:

In this use case, the consumer wants to be assisted only for specific channels. Thus, when he is watching specific channels and then zaps away, he wants to be assisted for automatic return when the program continues.

The preferred channel is set to "manual" and a list of channels is entered (Fig. 24). This disables the auto selection of the "preferred channel". The system monitors triggers for the channels of the list. Whenever zapping occurs, while watching one of these channels, the assistance will check for continuation of the ongoing program. No assistance will be provided for zapping from other channels. The "time to automatic selection" is not used in this case.

### d. Viewing assistance - use of preferred content - I want to be informed when on any channel a horror movie starts:

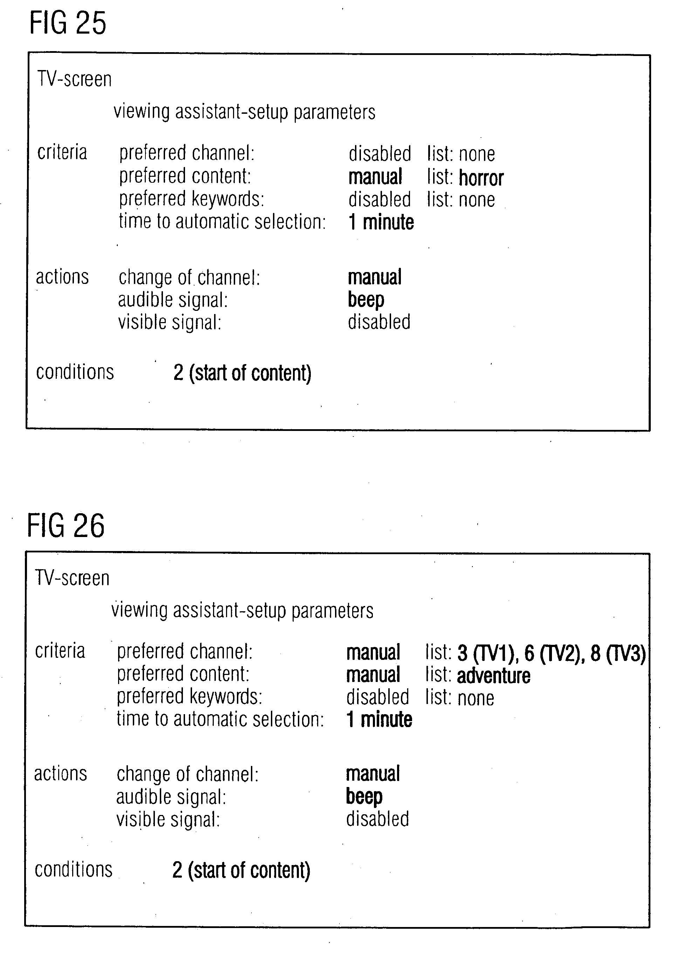

In this use case, the consumer wants to be assisted only for specific content. He wants to be informed when the movie starts. For this purpose the preferred content parameter is used and set to "manual", in the list the content category is entered ("horror"), as condition "2 (start of content)" is used, and change of channel is set to "manual" (Fig. 25). i.e., the consumer wants to be informed and wants to decide for himself whether to change. The system will monitor all available triggering information and inform the consumer via a short message when such a movie is about to start.

### e. Viewing assistance - use of preferred content - I want to be informed when on specific channels an adventure movie starts:

In this use case, the consumer wants to be assisted only for specific content. He wants to be informed when the movie starts. For this purpose the preferred content parameter is used and set to "manual", in the list the content category is entered ("adventure"), as condition "2 (start of content)" is used, and change of channel is set to "manual" (Fig. 26). I.e., the consumer wants to be informed and wants to decide for himself whether to change. Since only specific channels are to be monitored, also the list of channels is entered.

So, on whatever channel the consumer is watching, as soon as a start of adventure is detected on channels 3, 6, or 8, a message will be displayed to inform the consumer and allow for manual change.

### f. Viewing assistance - use of preferred content - I want to be informed when on specific channels an adventure movie starts or continues:

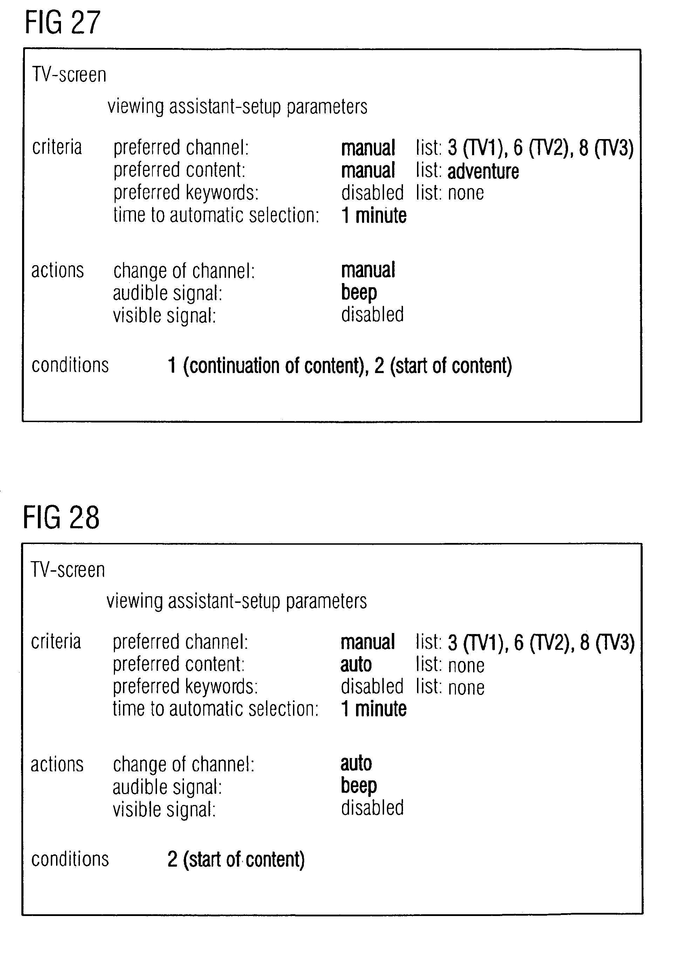

The difference with the case e is that here the consumer might be watching an adventure movie and zap away during a break. The consumer then wants to be informed when the movie continues. The consumer will be informed and will be allowed for manual change whenever on the listed channels an adventure movie starts or continues (Fig. 27). Of course, the triggering messages must contain enough information to distinguish between start of an adventure movie (first content block of the movie) and a continuation of an adventure movie (subsequent blocks of information).

### g. Viewing assistance - use of preferred content - I want to be informed when on specific channels the same content starts as the content that I am watching:

The consumer knows that program content of a same category (e.g. news) overlaps temporarily on two channels. He wants to start watching the first news but changeover to the later broadcast when this starts. For this purpose the consumer uses the auto preferred content feature which will - after one minute of watching the first news - set the preferred content to the category "news". From then on the indicated channels will be monitored for start of such content (Fig. 28). As soon as such content starts, the change of channel will be proposed.

Even with change of channel set to "auto" the system will not changeover automatically, since the consumer is watching a program of content category "news", which is the preferred content. Whenever a second program of the preferred content starts, the system will only propose to change and allow the consumer to decide. If the consumer in this setup is not watching a news program, then the system would changeover automatically.

### h. Viewing assistance - use of preferred channel - I want to watch a movie, disable zapping during the movie, allow for zapping during breaks but have automatic return after a break/interrupt:

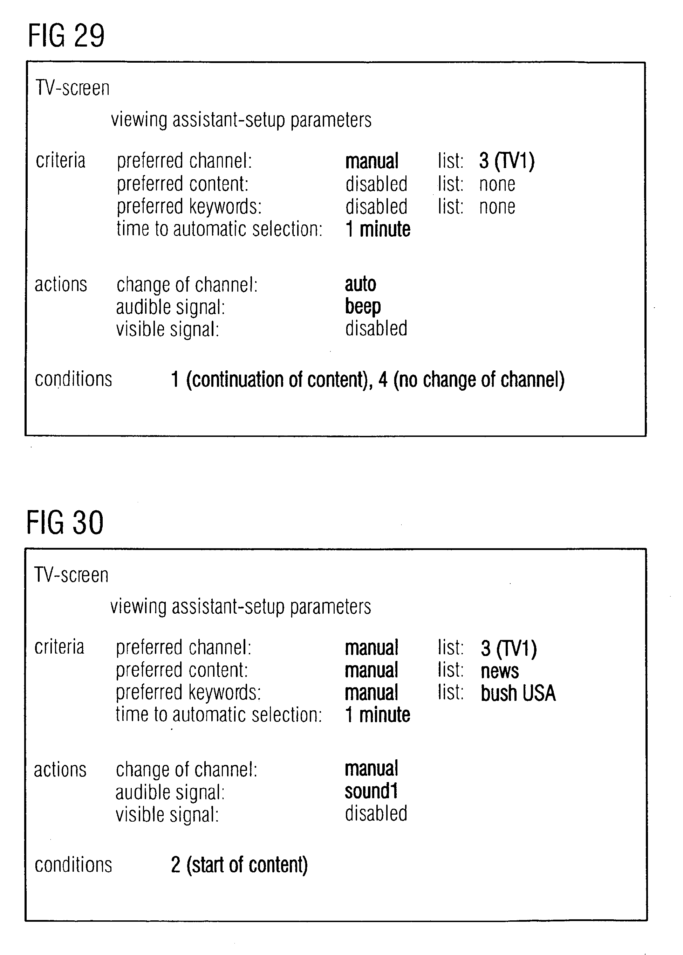

The consumer setup in this case includes, besides the condition "continuation of content", also the condition "no change of channel" (Fig. 29). When leaving the setup, the assistant is active. The preferred channel is set to channel 3. When the consumer selects channel 3, the assistant starts monitoring. From this point in time on, the assistant will not allow a change of channel during a content block. Only in the first 30 seconds of a content block, the consumer will be allowed to zap away. When zapping away, the system will monitor for continuation and return automatically to channel 3 after generation of a beep signal.

### i. Viewing assistance - use of preferred keywords - the consumer wants to be informed when content is started which is defined by one or more specific keywords (e.g. the consumer wants to be informed of content regarding elections in USA) :

The consumer enters his keyword(s) in the list (Fig. 30). The system monitors the available keywords in the triggering. When a match is found, the system will inform the consumer and allow for manual change to that channel. Again the monitoring can be limited to a number of channels by including these channels in the list of channels. The monitoring can even be further restricted by also including specific categories into the list of categories. In the configuration screen below, the consumer wants to be informed when on channel 3 a news program has announced via the triggering that it will report on "bush USA". The information will be accompanied with a sound 1. The available audible signals can contain a large list of sounds, which may be similar to the ring tones in a mobile phone.

### j. Viewing assistance - use of "switch off" channel - the consumer wants the TV signal to be stopped at a specific time (e.g. the children shall stop watching at latest until 7:30 PM) :

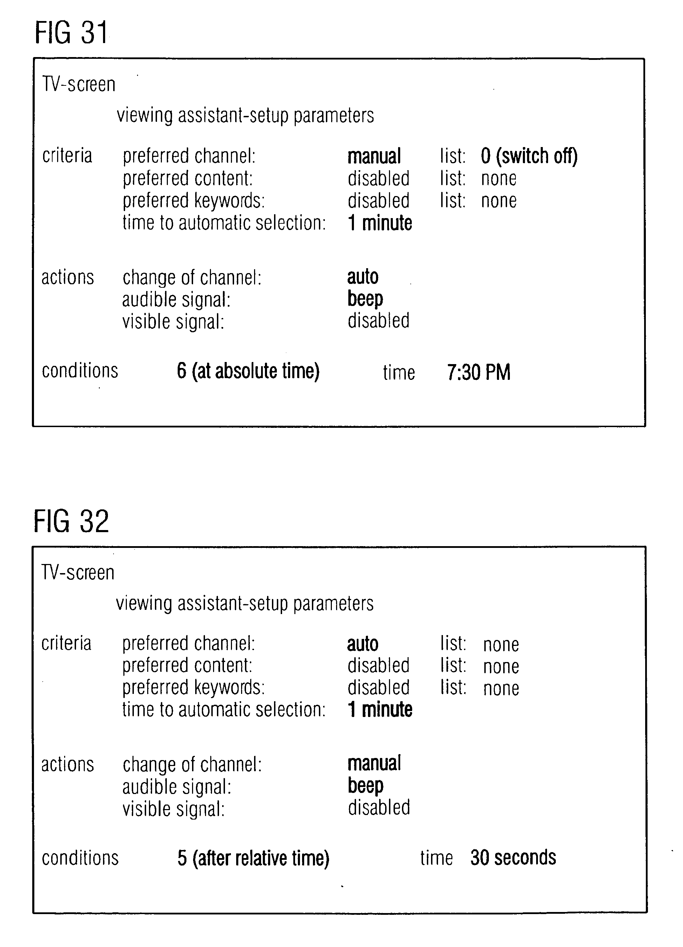

The consumer selects the appropriate condition and selects an automatic change of channel to a special channel, i.e. the switch-off channel (Fig. 31). When the condition occurs (here at 7:30), the set-top box will not send the broadcast signal to the TV set any longer. The signal will be restored when the consumer enters the viewing assistance menu and leaves it again. This might be protected with a pin or a password.

A variant to this use case is the use of the condition 3 (end of content). The consumer might allow for watching a specific program till the end. But once the end is reached, the broadcast is stopped.

### k. Viewing assistance - time indication during zapping - the consumer only wants to be reminded of a relative time lap when zapping:

The consumer selects the appropriate condition and selects manual change of channel (Fig. 32). The system will determine the preferred channel (see first use cases). When zapping occurs, the system will inform the consumer after the relative time has passed. As long as the consumer does not agree to return the system will restart at the relative time and remind the consumer again, when the times elapses a second time.

It should be noted that the term "comprising" does not exclude other elements or steps and the "a" or "an" does not exclude a plurality. Also elements described in association with different embodiments may be combined. Reference signs in claims should not be construed as limiting the scope of claims.

Summarized, the method and the corresponding device for selection of television programs employ a content category identifier, which designates a current first content category of a first program content. A second program content is transmitted to a subscriber device and played back for perception by a consumer. The content category identifier is compared with a preferred-content category identifier. On a matching of both identifiers the consumer receives a notification. In addition or as an alternative, a change from the first playback of the second program content to a second playback of the first program content is triggered on a matching of both identifiers.

### List of reference signs:

- 101: subscriber device (e.g. set-top box)
- 103: first change
- 104: second change
- 105: first playback
- 106: second playback
- 107: third playback
- 108: television set
- 111: extraction of 1st content category identifier
- 112: first, second comparison
- 113: first input of configuration parameters
- 114: first notification
- 115: second notification
- 121: first program content
- 122: second program content
- 131: creation of first content category identifier
- 141: second transmission
- 142: first transmission

- 203: third change
- 204: fourth change
- 205: fourth playback
- 206: fifth playback
- 207: sixth playback
- 211: extraction of 2nd content category identifier
- 212: third, fourth comparison
- 213: second input of configuration parameters
- 214: third notification
- 215: fourth notification
- 223: third program content
- 232: creation of second content category identifier
- 243: third transmission

- 303: fifth change
- 305: seventh playback
- 311: extraction of 3rd content category identifier
- 312: fifth comparison
- 314: fifth notification
- 324: fourth program content
- 334: creation of third content category identifier
- 344: fourth transmission

## Claims

1. A method for a television service, wherein the method comprises following steps:
- a first creation (131) of a first content category identifier (BC11, BC12, BC13) for a first program content (121, C11, C12, C13), wherein the first content category identifier (BC11, BC12, BC13) designates a first content category of the first program content (121, C11, C12, C13) and comprises a first time designation,
- a first transmission (142) of a second program content (122, C21, C22, C23) to a subscriber device (101, 108),
- a first playback (105) of the second program content (122, C21, C22, C23) using the subscriber device (101, 108),
- a first comparison (112) of the first content category identifier (BC11, BC12, BC13) of the first program content (121) with a first preferred-content category identifier, and
- if the first content category identifier (BC11, BC12, BC13) of the first program content (121, C11, C12, C13) is matching the first preferred-content category identifier, a first notification (114) of a consumer (109) and/or a first change (103) from the first playback (105) of the second program content (122) to a second playback (106) of the first program content (121, C11, C12, C13).

2. The method according to claim 1, wherein after the first change (103) following additional method step is performed, if the content category identifier (BC11, BC12, BC13) of the first program content (121, C11, C12, C13) is no longer matching the first preferred-content category identifier: a second notification (115) of the consumer (109) and/or a second change (104) from the second playback (106) of the first program content (121, C11, C12, C13) to a third playback (107) of the second program content (122, C21, C22, C23).

3. The method according to claim 1 or 2, wherein the first notification (114) and/or the first change is disabled if a second content category identifier (BC21, BC22, BC23) of the second program content (122, C21, C22, C23) is matching a second preferred-content category identifier.

4. The method according to one of claims 1 to 3, wherein a manual change of a program (121, 122, 223, 324) being played back (105, 106, 107, 205, 206, 207, 305) is only enabled within a first predetermined period, wherein the first predetermined period starts with a begin of the program content (Ci1, Ci2, Ci3), in particular wherein the program content (Ci1, Ci2, Ci3) is designated with a third preferred-content category identifier.

5. The method according to one of claims 1 to 4, wherein the method comprises following steps:
- a second creation (232) of a second content category identifier (BC21, BC22, BC23) for the second program content (122, C21, C22, C23), wherein the second content category identifier (BC21, BC22, BC23) designates a second content category of the second program content (122, C21, C22, C23) and comprises a second time designation,
- a third transmission (243) of a third program content (223, C31, C32, C33) to the subscriber device (101, 108),
- a fourth playback (205) of the second program content (122, C21, C22, C23) using the subscriber device (101, 108),
- a second comparison (212) of the second content category identifier (BC21, BC22, BC23) of the second program content (122, C21, C22, C23) with a fourth preferred-content category identifier, and
- if the second content category identifier (BC21, BC22, BC23) of the second program content (122, C21, C22, C23) is not matching the fourth preferred-content category identifier:
a third notification (214) of the consumer (109) and/or
a third change (203) from the fourth playback (205) of the second program content (122) to a fifth playback (206) of the third program content (223, C31, C32, C33).

6. The method according to one of claims 1 to 5, wherein after the third change (203) following additional method step is performed, if the second content category identifier (BC21, BC22, BC23) of the second program content (122, C21, C22, C23) is no longer not matching the fourth preferred-content category identifier:
a fourth notification (215) of the consumer (109) and/or
a fourth change (204) to a sixth playback (207) of the second program content (222, C21, C22, C23).

7. The method according to claim 6,
wherein the method also includes a fourth transmission (344) of a fourth program content (324, C41, C42, C43) to the subscriber device (101, 108), wherein a third content category identifier (BC41, BC42, BC43) designates a third content category of the fourth program content (324, C41, C42, C43) and comprises a third time designation, and wherein after the third change (203) and before the fourth change (204) following additional method step is performed, if the third content category identifier (BC41, BC42, BC43) of a fourth program content (324, C41, C42, C43) is matching a fourth preferred-content category identifier:
a fifth notification (314) of the consumer (109) and/or
a fifth change (303) from the fifth playback (206) of the third program content (323, C31, C32, C33) to a sixth playback (305) of the fourth program content (324, C41, C42, C43).

8. The method according to one of claims 1 to 7,
wherein at least one of the first (114), second (115), third (214), fourth (215), and fifth (314) notifications will not be performed if a content category identifier (BCi1, BCi2, BCi3) assigned to the program content (121, 122, 223, 324, Ci1, Ci2, Ci3), currently being played back (105, 106, 107, 205, 206, 207, 305), has been predetermined as one of the first preferred-content category identifiers.

9. The method according to one of claims 1 to 8, wherein the first (103), second (104), third (203), fourth (204) and/or fifth (303) changes will not be performed if the content category identifier (BCi1, BCi2, BCi3) assigned to the program content (121, 122, 223, 324, Ci1, Ci2, Ci3), currently being played back (105, 106, 107, 205, 206, 207, 305), has been predetermined as the first preferred-content category identifier.

10. The method according to one of claims 1 to 9, wherein the first notification (114) of the consumer (109) notifies the consumer (109) about a first begin time (T11, T12, T13) or a first resumption time (T11, T12, T13) of the first program content (121, C11, C12, C13).

11. The method according to claim 10, wherein the first notification (114) of the consumer (109) comprises an explicit or an implicit designation of a time span corresponding to a temporal difference between the time designated by the content category designation of the first program content (121, C11, C12, C13) and a current time.

12. The method according to one of claims 1 to 11, wherein the consumer (109) may designate the first program content (121, C11, C12, C13) as a preferred program content by a precedent selecting of at least a portion of the first program content (121, C11, C12, C13) for the first playback (105) for a longer time than corresponds to a second predefined period.

13. The method according to one of claims 1 to 12, wherein the first (BC11, BC12, BC13) and/or the second (BC21, BC22, BC23) and/or the third (BC31, BC32, BC33) content category identifier is added to information, which comprises at least the corresponding program content (121, C11, C12, C13; 122, C21, C22, C23; 223, C31, C32, C33; 324, C41, C42, C43), and which is transmitted together with this information to the subscriber device (101, 108).

14. The method according to one of claims 1 to 13, wherein the first program content (121, C11, C12, C13) is transmitted (141) via a first transmission channel and the second program content (122, C21, C22, C23) is transmitted (142) via a second transmission channel.

15. The method according to one of claims 1 to 14, wherein the first notification (106) and/or the first change (103) is only performed, if the first program content (121, C11, C12, C13) is transmitted via a preferred transmission channel.

16. The method according to one of claims 1 to 15, wherein however the first change (103) and/or the first notification (114) is not performed, if the second transmission channel has been determined as a preferred transmission channel before.

17. The method according to one of claims 1 to 16, wherein a consumer predetermines a transmission channel as preferred transmission channel by selecting the transmission channel for playback (105, 106, 107, 205, 206, 207, 305) for a longer time than corresponds to a third predetermined period.

18. The method according to one of claims 1 to 17, wherein the first change (103) to the first program content (121, C11, C12, C13) takes place at a predetermined time and/or not before a fourth predetermined period after the last change (103, 104) and/or, wherein the first change (103) is delayed, until an expiry of a fifth predetermined period after the last change (103, 104) and/or wherein the first change (103) is performed at an event which is dependent on the first program content (121, C11, C12, C13).

19. The method according to one of claims 1 to 18, wherein the content category identifier (BC11, BC12, BC13) of the first program content (121, C11, C12, C13) is transmitted to the subscriber device (101, 108) and wherein the comparison (112) of the first content category identifier (BC11, BC12, BC13) of the first program content (121, C11, C12, C13) with the first preferred-content category identifier is performed by the subscriber device (101, 108).

20. The method according to one of claims 1 to 19,
wherein at least one of the notifications (114, 115, 214, 215, 314) is generated by the subscriber device (101, 108) and/or
wherein at least one of the changes (103, 104, 203, 204, 303) is performed by the subscriber device (101, 108).

21. Subscriber device (101, 108) for one or more consumers (109) for performing the method according to one of the claims 1 to 20.
